# EUROPÄISCHE PATENTSCHRIFT

(11) **EP 1 727 846 B1**
(45) Veröffentlichungstag und Bekanntmachung des Hinweises auf die Patenterteilung: **16.09.2009**
(21) Anmeldenummer: 05715755.4
(22) Anmeldetag: 05.03.2005
(51) Int. Cl.: C08G 18/78, C08G 18/67, C08G 18/16, C09D 175/16

(54) **HERSTELLUNG VON NEUEN STRAHLENHÄRTENDEN BINDEMITTELN**
PRODUCTION OF NOVEL RADIATION-HARDENING BINDING AGENTS
PRODUCTION DE NOUVEAUX LIANTS DURCISSABLES PAR RAYONNEMENT

(30) Priorität: 17.03.2004 DE 102004012902
(43) Veröffentlichungstag der Anmeldung: 06.12.2006
(73) Patentinhaber: Bayer MaterialScience AG, 51368 Leverkusen (DE)
(72) Erfinder: DÈTREMBLEUR, Christophe, B-4000 Liège (BE); WEIKARD, Jan, 51519 Odenthal (DE); GRESZTA-FRANZ, Dorota, 40699 Erkrath (DE); FISCHER, Wolfgang, 40668 Meerbusch (DE); SCHMITZ, Jörg, 51065 Köln (DE); MUNDSTOCK, Holger, 42929 Wermelskirchen (DE)
(86) Internationale Anmeldenummer: PCT/EP2005/002333
(87) Internationale Veröffentlichungsnummer: WO 2005/092943

(56) Entgegenhaltungen:
- EP-A- 0 649 866
- EP-A- 0 825 211
- EP-A- 1 013 688

## Beschreibung

Die vorliegende Erfindung betrifft ein Verfahren zur Herstellung neuartiger Bindemittel, die unter Einwirkung aktinischer Strahlung mit ethylenisch ungesättigten Verbindungen unter Polymerisation reagierende Gruppen und gegebenenfalls auch gegenüber Isocyanaten reaktive Gruppen aufweisen sowie deren Verwendung in Beschichtungsmitteln.

Die Härtung von aktivierten Doppelbindungen tragenden Beschichtungssystemen durch aktinische Strahlung, wie z. B. UV-Licht, IR-Strahlung oder auch Elektronenstrahlung ist bekannt und technisch etabliert. Es ist eine der schnellsten Härtungsmethoden in der Beschichtungstechnologie.

Besonders vorteilhafte Eigenschaften können erzielt werden, wenn die Strahlenhärtung mit einem davon unabhängig steuerbaren zweiten Vernetzungsschritt kombiniert wird. Derartige Beschichtungssysteme werden als Dual-Cure-Systeme bezeichnet (z.B. Macromol. Symp. 187, 531-542, 2002).

Bedingt durch die ökologischen und ökonomischen Anforderungen an moderne Lacksysteme möglichst wenig oder gar kein organisches Lösungsmittel zur Viskositätseinstellung zu verwenden, besteht der Wunsch, bereits niedrigviskose Lackrohstoffe zu verwenden. Bekannt hierfür sind seit langem Polyisocyanate mit Allophanatstruktur wie sie u. a. in EP-A 0 682 012 beschrieben werden.

In der Technik werden diese durch Umsetzung eines ein- oder mehrwertigen Alkohols mit überschüssigem aliphatischen und/oder cycloaliphatischen Diisocyanat hergestellt (vgl. GB-A 994 890, EP-A 0 000 194 oder EP-A 0 712 840). Anschließend erfolgt die Entfernung nicht reagierten Diisocyanats mittels Abdestillation im Vakuum. Nach DE-A 198 60 041 kann diese Verfahrensweise auch mit OH-funktionellen Verbindungen mit aktivierten Doppelbindungen, wie z.B. Hydroxyalkylacrylaten, durchgeführt werden, wobei jedoch zur Herstellung besonders monomerenarmer Produkte Schwierigkeiten auftreten. Da der Destillationsschritt bei Temperaturen bis zu 135°C verlaufen muss, um den Rest-Isocyanatgehalt ausreichend senken zu können (< 0,5 Gew.-% Restmonomer), können während der Aufreinigung bereits Doppelbindungen thermisch initiiert unter Polymerisation reagieren, so dass keine einwandfreien Produkte mehr erhalten werden.

EP-A 0 825 211 beschreibt ein Verfahren zum Aufbau von Allophanatstrukturen aus Oxadiazintrionen, wobei allerdings keine strahlenhärtenden Derivate mit aktivierten Doppelbindungen bekannt sind. Lediglich die Verwendung von Maleinat- und/oder Fumarathaltigen Polyestern wird erwähnt, die Möglichkeit der Strahlenhärtung wird nicht beschrieben.

US-A 5 777 024 beschreibt die Herstellung der niedrigviskosen strahlenhärtenden Allophanaten durch eine Reaktion von Hydroxy-funktionellen Monomeren, die aktivierte Doppelbindungen tragen, mit NCO-gruppenhaltigen, allophanatmodifizierten Isocyanuraten.

Die Bildung von Allophanat-Verbindungen durch Ringöffnung von Uretdionen mit Alkoholen ist als Vernetzungsmechanismus in Pulverlacken bekannt (vgl. Proceedings of the International Waterborne, High-Solids, and Powder Coatings Symposium 2001, 28th, 405-419, sowie US-A 2003 0153 713). Allerdings sind die dazu nötigen Reaktionstemperaturen für die gezielte Herstellung von strahlenhärtenden Monomeren auf Allophanatbasis mit aktivierten Doppelbindungen zu hoch (≥120°C).

Historisch wurde die direkte Reaktion von Uretdion-Ringen mit Alkoholen zu Allophanaten erstmals für lösemittelhaltige Isocyanat-freie 2K-Polyurethan-Lacke untersucht. Unkatalysiert ist diese Reaktion aufgrund der geringen Reaktionsgeschwindigkeit ohne technische Bedeutung (F. Schmitt, Angew. Makromol. Chem. (1989), 171, S. 21-38). Mit geeigneten Katalysatoren soll die Vernetzungsreaktion zwischen Hexamethylendiisocyanat(HDI)-basierten Uretdionhärtern und Polyolen aber schon bei 60-80°C einsetzen (K. B. Chandalia; R. A Englebach; S. L.Goldstein; R. W. Good; S. H. Harris; M. J. Morgan; P. J. Whitman; R. T. Wojcik, Proceedings of the International Waterborne, High-Solids, and Powder Coatings Symposium, (2001), S. 77-89). Die Struktur dieser Katalysatoren wurde bisher nicht veröffentlicht. Kommerzielle Produkte, zu deren Herstellung diese Reaktion genutzt wird, sind bisher auch nicht bekannt.

Zusammenfassend lässt sich festhalten, dass die Herstellung von niedrigviskosen strahlenhärtenden Allophanaten durch eine ringöffnende Umsetzung von Alkoholen mit Uretdionen bei Temperaturen unter 100°C aus dem Stand der Technik her nicht bekannt ist.

Aufgabe der vorliegenden Erfindung war daher die Bereitstellung eines Verfahrens zur Herstellung niedrigviskoser Allophanate, die aktinisch härtbare und vorteilhaft auch isocyanatreaktive Gruppen aufweisen und daher als Vernetzer für Dual-Cure-Anwendungen geeignet sind, wobei diese Verbindungen aufgrund ihrer Allophanatstruktur niedrigere Viskositäten aufweisen sollen als entsprechende Verbindungen, die nur Urethanstrukturen aufweisen. Weiterhin sollen zu deren Herstellung bzw. Nachbehandlung Temperaturen von unter 100°C ausreichen.

Es konnte nun gefunden werden, dass durch Umsetzung von Uretdion- und NCO-funktionellen Verbindungen mit Alkoholen, die aktinisch härtbare Doppelbindungen enthalten, sowie Polyhydroxyverbindungen unter Einsatz von Phenolat-Salzen als Katalysatoren Bindemittel erhalten werden, die aktinisch härtbare und gegebenenfalls auch NCO-reaktive Gruppen aufweisen und die genannten Anforderungen erfüllen.

Im Rahmen der vorliegenden Erfindungen werden die Begriffe "strahlenhärtende Gruppen", "aktinisch härtende Gruppen" und "unter Einwirkung aktinischer Strahlung mit ethylenisch ungesättigten Verbindungen unter Polymerisation reagierende Gruppen" synonym verwendet.

Unter Einwirkung aktinischer Strahlung mit ethylenisch ungesättigten Verbindungen unter Polymerisation reagierende Gruppen sind beispielsweise Vinyl-, Vinylether-, Propenyl-, Allyl-, Maleinyl-, Fumaryl-, Maleinimid-, Dicyclopentadienyl-, Acrylamid-, Acryl- und Methacryl-Gruppen wobei bevorzugt aktivierte Gruppen dieser Art wie Vinylether-, Acrylat- und/oder Methacrylat-Gruppen, besonders bevorzugt Acrylatgruppen in den Verbindungen der Komponente B) zum Einsatz kommen.

Unter NCO-reaktiven Gruppen werden OH-, SH- und NH-funktionelle Verbindungen verstanden, insbesondere Hydroxyl-, primäre und/oder sekundäre Aminogruppen, und/oder Asparaginatgruppen. Bevorzugt sind Hydroxylgruppen.

Gegenstand der Erfindung ist daher ein Verfahren zur Herstellung allophanatgruppenhaltiger Bindemittel, die unter Einwirkung aktinischer Strahlung mit ethylenisch ungesättigten Verbindungen unter Polymerisation reagierende Gruppen und gegebenenfalls auch NCO-reaktive Gruppen aufweisen, bei dem
A) eine oder mehrere uretdiongruppenhaltige und NCO-funktionelle Verbindungen zunächst mit
B) einer oder mehreren Verbindungen, die gegenüber Isocyanaten reaktive Gruppen und unter Einwirkung aktinischer Strahlung mit ethylenisch ungesättigten Verbindungen unter Polymerisation reagierende Gruppen aufweisen, und dann
C) mit einer oder mehreren von B) verschiedenen hydroxylgruppenhaltigen Verbindungen, wobei wenigstens eine dieser Verbindungen eine OH-Funktionalität von ≥ 2 aufweist,
D) in Anwesenheit einer oder mehrerer phenolatgruppenhaltiger Verbindungen als Katalysatoren und
E) optional Hilfs- und Zusatzstoffen
   umgesetzt werden, wobei die Umsetzung mit Verbindungen der Komponente C) zumindest anteilig unter Bildung von Allophanatgruppen verläuft.

Darüber hinaus sind die nach dem erfindungsgemäßen Verfahren erhältlichen Bindemittel ein Gegenstand der Erfindung.

In Komponente A) können alle organischen Verbindungen eingesetzt werden, die mindestens eine Uretdion- und eine NCO-Gruppe aufweisen.

Bevorzugt weisen die in A) eingesetzten Verbindungen einen Gehalt an Uretdiongruppen (berechnet als C₂N₂O₂ = 84 g/mol) von 3 bis 60 Gew.-%, besonders bevorzugt von 10 bis 50 Gew.-%, insbesondere von 25 bis 40 Gew.-% auf.

Bevorzugt weisen die in A) eingesetzten Verbindungen gleichzeitig zu dem vorstehend genannten Uretdiongruppengehalt auch von 3 bis 60 Gew.-%, besonders bevorzugt von 10 bis 50 Gew.-%, insbesondere von 15 bis 25 Gew.-% an NCO-Gruppen (berechnet als NCO = 42 g/mol) auf.

Derartige Verbindungen werden üblicherweise durch katalytische Dimerisierung von aliphatischen, cycloaliphatischen, aromatischen und/oder araliphatischen Di- oder Polyisocyanaten nach an sich bekannten Verfahren hergestellt (vgl. J. Prakt. Chem. 1994, 336, Seite 196-198).

Geeignete Diisocyanate sind beispielsweise 1,4-Diisocyanatobutan, 1,6-Diisocyanatohexan, Trimethylhexandiisocyanat, 1,3- und 1,4-bis-Isocyanatomethylcyclohexan, Isophorondiisocyanat (IPDI), 4,4'-Diisocyanatodicyclohexylmethane, 1,3- und 1,4-Xylylendiisocyanate (XDI Handelsprodukt der Fa. Takeda, Japan), Diphenylmethan-4,4'-diisocyanat und Diphenylmethan-2,4'-diisocyanat (MDI), 2,4- und 2,6-Toluenediisocyanat (TDI), oder ihre Mischungen. Im Sinne der Erfindung ist die Verwendung von 1,6-Diisocyanatohexan, Isophorondiisocyanat und/oder deren Mischungen bevorzugt.

Als Katalysatoren kommen dabei z.B.: Trialkylphosphine, Dimethylaminopyridine, Tris-(dimethylamino)-phosphin zum Einsatz.

Das Ergebnis der Dimerisierungsreaktion hängt in dem Fachmann bekannter Weise von dem verwendeten Katalysator, den Verfahrensbedingungen sowie den eingesetzten Diisocyanaten ab. Insbesondere können Produkte entstehen, die im Mittel mehr als eine Uretdiongruppe pro Molekül aufweisen, wobei die Anzahl der Uretdiongruppen einer Verteilung unterliegt. In Abhängigkeit von dem verwendeten Katalysator, den Verfahrensbedingungen sowie den eingesetzten Diisocyanaten entstehen auch Produktgemische, die neben Uretdionen auch andere Struktureinheiten aufweisen wie z.B. Isocyanurat und/oder Iminooxadiazindion.

Besonders bevorzugte Verbindungen der Komponente A) enthalten Produkte der katalytischen Dimerisierung von HDI, weisen einen Gehalt an freiem HDI von unter 0,5 Gew.-%, einen NCO-Gehalt von 17 - 25 Gew.-%, insbesondere von 21 - 24 Gew.-% und eine Viskosität bei 23°C von 20 bis 500 mPas, insbesondere von 50 bis 200 mPas auf.

Die durch katalytische Dimerisierung erhältlichen NCO-funktionellen Verbindungen werden bevorzugt direkt in Komponente A) eingesetzt; ein Teil der Isocyanatgruppen kann aber auch zunächst noch weiter umgesetzt werden, und das resultierende Produkt anschließend in A) verwendet werden. Dies kann beispielsweise eine Blockierung eines Teils der freien NCO-Gruppen oder die weitere Umsetzung von NCO-Gruppen mit in der Isocyanatchemie bekannten und unter anderem beispielhaft in J. Prakt. Chem. 1994, 336, Seite 185 beschriebenen NCO-reaktiven Verbindungen zu Iminooxadiazindion- , Isocyanurat-, Uretdion-, Urethan-, Allophanat-, Biuret-, Harnstoff-, Oxadiazintrion, Oxazolidinon-, Acylharnstoff-, oder Carbodiimid-Stukturen sein. Dabei werden uretdiongruppenhaltige Verbindungen mit erhöhtem Molekulargewicht erhalten, die abhängig von der gewählten Verhältnissen unterschiedliche Gehalte an NCO-Gruppen aufweisen.

Beispielsweise geeignete Blockierungsmittel sind Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam, N-tert.-Butyl-benzylamin, Cyclopentanoncarboxyethylester oder beliebige Gemische dieser Blockierungsmittel. Die Verfahrensweise zur Blockierung von NCO-Gruppen ist dem Fachmann vertraut und exemplarisch in Progress in Organic Coatings 1999, 36, 148-172 beschrieben.

Beispielsweise können die NCO-Gruppen auch teilweise mit hydrophilierend wirkende Verbindungen mit mindestens einer isocyanatreaktiven Gruppe einzeln oder als Mischung eingesetzt werden. Hydrophilierend wirkende Verbindungen werden insbesondere dann eingesetzt, wenn das erfindungsgemäße Verfahrensprodukt in Wasser oder wasserhaltigen Mischungen gelöst oder dispergiert werden soll.

Unter hydrophilierend wirkenden Verbindungen werden alle ionisch, potentiell ionisch und nicht ionisch hydrophilierenden Verbindungen mit mindestens einer gegenüber Isocyanaten reaktiven Gruppe verstanden. Diese Verbindungen weisen als isocyanatreaktive Gruppen bevorzugt Hydroxy- und/oder Aminofunktionen auf.

Als ionisch oder potentiell ionisch hydrophilierende Verbindungen werden bevorzugt Verbindungen eingesetzt, die mindestens eine isocyanatreaktive Gruppe sowie mindestens eine Funktionalität, wie z.B. -COOY, -SO₃Y, -PO(OY)₂ (Y = H, NH₄⁺, Metallkation), -NR₂, -NR₃⁺, -PR₃⁺ (R = H, Alkyl, Aryl), aufweisen. Unter potentiell ionisch hydrophilierend werden solche Verbindungen verstanden, die bei Wechselwirkung mit wässrigen Medien ein ggf. pH-Wert-abhängiges Dissoziationsgleichgewicht eingehen und auf diese Weise negativ, positiv oder neutral geladen sind.

Geeignete ionisch oder potentiell ionisch hydrophilierende Verbindungen sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-β-alanin, 2-(2-Amino-ethylamino)-ethansulfonsäure, Ethylendiamin-propyl- oder Butylsulfonsäure, 1,2- oder 1,3-Propylendiamin-β-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III) sowie in kationische Gruppen überführbare Bausteine wie N-Methyl-diethanolamin als hydrophile Aufbaukomponenten. Bevorzugte ionisch oder potentiell ionisch hydrophilierende Verbindungen sind solche, die über Carboxy- oder Carboxylatund/oder Sulfonatgruppen und/oder Ammoniumgruppen verfügen. Besonders bevorzugte ionische Verbindungen sind solche, die Carboxyl- und/oder Sulfonatgruppen als ionische oder potentiell ionische Gruppen enthalten, wie die Salze von N-(2-Aminoethyl)-β-alanin, der 2-(2-Aminoethylamino-)ethansulfonsäure oder des Additionsproduktes von IPDI und Acrylsäure (EP-A 0 916 647, Beispiel 1) sowie der Dimethylolpropionsäure.

Als hydrophile nichtionische Verbindungen können Verbindungen mit Polyetherstruktur, bevorzugt Alkylenoxid-basierende Polyether eingesetzt, die mindestens eine Hydroxy- oder Aminogruppe als isocyanatreaktive Gruppe enthalten.

Diese Verbindungen mit Polyetherstruktur können beispielsweise einwertige, im statistischen Mittel 5 bis 70, bevorzugt 7 bis 55 Ethylenoxideinheiten pro Molekül aufweisende Polyalkylenoxidpolyetheralkohole mit mindestens 30 mol% Ethylenoxid sein, wie sie in an sich bekannter Weise durch Alkoxylierung geeigneter Startermoleküle zugänglich sind (z.B. in Ullmanns Encyclopädie der technischen Chemie, 4.Auflage, Band 19, Verlag Chemie, Weinheim S. 31-38).

Geeignete Startermoleküle sind beispielsweise gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder IH-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge getrennt voneinander oder im Gemisch bei der Alkoxylierungsreaktion eingesetzt werden können, so dass Block- oder Mischpolyether erhalten werden.

Bevorzugt handelt es sich bei den Verbindungen mit Polyetherstruktur um reine Polyethylenoxidpolyether oder gemischte Polyalkylenoxidpolyether, deren Alkylenoxideinheiten zu mindestens 30 mol-%, bevorzugt zu mindestens 40 mol% aus Ethylenoxideinheiten bestehen.

Ganz besonders bevorzugt sind monofunktionelle gemischte Polyalkylenoxidpolyether, die mindestens 40 mol% Ethylenoxid- und maximal 60 mol% Propylenoxideinheiten aufweisen.

Insbesondere bei der Verwendung eines ionische Gruppen enthaltenden Hydrophilierungsmittel muss sein Einfluss auf die Wirkung des Katalysators D) überprüft werden. Aus diesem Grund sind nichtionische Hydrophilierungsmittel bevorzugt.

Beispielsweise geeignete Verbindungen der Komponente B), die alleine oder in Mischung eingesetzt werden können, sind 2-Hydroxyethyl(meth)acrylat, Polyethylenoxid-mono(meth)acrylat (z.B. PEA6 / PEM6; Laporte Performance Chemicals Ltd., UK), Polypropylenoxidmono(meth)acrylat (z.B. PPA6, PPM5S; Laporte Performance Chemicals Ltd., UK), Polyalkylenoxidmono(meth)-acrylat (z.B. PEM63P, Laporte Performance Chemicals Ltd. , UK), Poly(ε-caprolacton)mono-(meth)acrylate (z.B. Tone M100^{®} Dow, Schwalbach, DE), 2-Hydroxypropyl(meth)acrylat, 4-Hydroxybutyl(meth)acrylat, 3-Hydroxy-2,2-dimethylpropyl(meth)acrylat, die hydroxyfunktionellen Mono-, Di- oder soweit möglich höheren Acrylate wie z.B. Glycerindi(meth)acrylat, Trimethylolpropandi(meth)acrylat, Pentaerythrittri(meth)acrylat oder Dipentaerythritpenta(meth)acrylat, die durch Umsetzung mehrwertiger gegebenenfalls alkoxylierter Alkohole wie Trimethylolpropan, Glycerin, Pentaerythrit, Dipentaerythrit gegebenenfalls als technisch anfallende Mischung zugänglich sind.

Ebenfalls geeignet als Bestandteil von B) sind auch Alkohole, die sich aus der Umsetzung von doppelbindungshaltigen Säuren mit gegebenenfalls doppelbindungshaltigen Epoxidverbindungen erhalten werden, so z.B. die Umsetzungsprodukte von (Meth)acrylsäure mit Glycidyl(meth)acrylat oder Bisphenol-A-diglycidylether.

Darüber hinaus können ebenfalls ungesättigte Alkohole eingesetzt werden, die aus der Umsetzung von gegebenenfalls ungesättigten Säureanhydriden mit gegebenenfalls acrylatgruppenhaltigen Hydroxy- und Epoxidverbindungen erhalten werden. Beispielsweise sind dies die Umsetzungsprodukte von Maleinsäureanhydrid mit 2-Hydroxyethyl(meth)acrylat und Glycidyl(meth)acrylat.

Besonders bevorzugte Verbindungen der Komponente B) sind 2-Hydroxyethylacrylat, 2-Hydroxypropylacrylat, 4-Hydroxybutylacrylat, Tone M100^{®} (Dow, Schwalbach, DE), Polyethylenoxidmono(meth)acrylat (z.B. PEA6 / PEM6; Laporte Performance Chemicals Ltd., UK), Polypropylenoxidmono(meth)acrylat (z.B. PPA6, PPM5S; Laporte Performance Chemicals Ltd., UK) sowie die Umsetzungsprodukte von Acrylsäure mit Glycidylmethacrylat.

Komponente C) enthält eine oder mehrere von B) verschiedene hydroxylgruppenhaltige Verbindungen, wobei mindestens eine Verbindung eine derartige Funktionalität von ≥ 2 aufweist. Die Verbindungen können monomer und/oder polymer sein.

Geeignete niedermolekulare Mono-, Di- oder Polyole sind beispielsweise kurzkettige, d.h. 2 bis 20 Kohlenstoffatome enthaltende, aliphatische, araliphatische oder cycloaliphatische Monoalkohole, Diole oder Polyole. Beispiele für Monoalkohole sind Methanol, Ethanol, die isomeren Propanole, Butanole, Pentanole, weiterhin Diacetonalkohol, Fettalkohole oder fluorierte Alkohole wie sie z.B. unter dem Namen Zonyl^{®} von der Firma DuPont erhältlich sind. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Beispiele geeigneter Triole sind Trimethylolethan, Trimethylolpropan oder Glycerin. Beispiele geeigneter Polyole sind Ditrimethylolpropan, Pentaerythrit, Dipentaerythrit und Sorbit. Bevorzugt sind die Alkohole 1,4-Butandiol, 1,4-Cyclohexandimethanol, 1,6-Hexandiol und Trimethylolpropan.

Geeignet sind auch höherrnolekulare Polyole wie Polyesterpolyole, Polyetherpolyole, hydroxyfunktionelle (Meth)Acrylat(co)polymerisate, hydroxyfunktionelle Polyurethane oder entsprechende Hybride (vgl. Römpp Lexikon Chemie, S.465-466, 10. Aufl. 1998, Georg-Thieme-Verlag, Stuttgart).

Bei der Herstellung der hydroxyfunktionellen Polyester können insbesondere 6 Gruppen von Monomerbestandteilen zur Anwendung kommen:
1. (Cyclo)Alkandiole wie zweiwertige Alkohole mit (cyclo)aliphatisch gebundenen Hydroxylgruppen wie die bereits zuvor als niedermolekulare Diole erwähnten Verbindungen, weiterhin Polyethylen-, Polypropylen- oder Polybutylenglykole mit einem Molekulargewicht M" von 200 bis 4000 g/mol, bevorzugt 300 bis 2000 g/mol, besonders bevorzugt 450 bis 1200 g/mol. Umsetzungsprodukte der zuvor genannten Diole mit ε-Caprolacton oder anderen Lactonen können ebenfalls als Diole zum Einsatz gelangen.
2. Drei- und höherwertige Alkohole eines Molekulargewichts Mₙ von 92 bis 254 g/mol, wie z.B. Glycerin, Trimethylolpropan, Pentaerythrit, Dipentaerythrit und Sorbit, auf diesen Alkoholen gestartete Polyether wie z.B. das Umsetzungsprodukt von 1 mol Trimethylolpropan mit 4 mol Ethylenoxid, oder durch Umsetzung mit ε-Caprolacton oder anderen Lactonen gewonnene Alkohole.
3. Monoalkohole wie z. B. Ethanol, 1- und 2-Propanol, 1- und 2-Butanol, 1- Hexanol, 2-Ethylhexanol, Cyclohexanol und Benzylalkohol.
4. Dicarbonsäuren eines Molekulargewichts Mₙ von 104 bis 600 g/mol und/oder deren Anhydride, wie z.B. Phthalsäure, Phthalsäureanhydrid, Isophthalsäure, Tetrahydrophthalsäure, Tetrahydrophthalsäureanhydrid, Hexahydrophthalsäure, Hexahydrophthalsäureanhydrid, Cyclohexandicarbonsäure, Maleinsäureanhydrid, Fumarsäure, Malonsäure, Bernsteinsäure, Bernsteinsäureanhydrid, Glutarsäure, Adipinsäure, Pimelinsäure, Korksäure, Sebacinsäure, Dodecandisäure, hydrierte Dimerfettsäuren.
5. Höherfunktionelle Carbonsäuren bzw. deren Anhydride wie z.B. Trimellithsäure und Trimellithsäureanhydrid.
6. Monocarbonsäuren, wie z.B. Benzoesäure, Cyclohexancarbonsäure, 2-Ethylhexansäure, Capronsäure, Caprylsäure, Caprinsäure, Laurinsäure, natürliche und synthetische Fettsäuren.

Geeignete hydroxylgruppenhaltige Polyester enthalten das Umsetzungsprodukt von mindestens einem Bestandteil aus Gruppe 1 oder 2 mit mindestens einem Bestandteil aus Gruppe 4 oder 5. Alternativ können auch die oben beschriebenen Umsetzungsprodukte von Alkoholen mit Lactonen verwendet werden. Die hydroxylgruppenhaltige Polyester weisen zahlenmittlere Molekulargewichte Mₙ von 500 bis 10000 g/mol, bevorzugt 800 bis 3000 g/mol und einen Gehalt an Hydroxylgruppen von 1 bis 20, bevorzugt 3 bis 15 Gew.-% auf. Die Polyester können in Substanz oder in für das erfindungsgemäße Verfahren geeigneten Lösemitteln oder Reaktivverdünnern gelöst zum Einsatz kommen.

Neben den beschriebenen Polyesterpolyolen eignen sich auch dendrimere oder hyperverzweigte Verbindungen wie sie beispielsweise aus ethoxiliertem Pentaerythrit und Dimethylolpropionsäure erhältlich sind.

Geeignete Polycarbonatpolyole sind beispielsweise durch Umsetzung der zuvor bei den Polyesterpolyolen genannten Alkohlen mit organischen Carbonaten wie z.B. Diphenyl-, Dimethyl- oder Diethylcarbonat nach bekannten Methoden erhältlich. Sie weisen üblicherweise zahlenmittlere Molekulargewichte von 500 bis 5000 g/mol, bevorzugt von 750 bis 2500 g/mol und Hydroxylfunktionalitäten von 1,5 bis 3 auf.

Geeignete Polyether sind beispielsweise, die auf den oben genannten niedermolekulare Mono-, Di- oder Polyolen gestartete Alkylenoxid-Polyether. Weiterhin durch Polymerisation von Tetrahydrofuran erhältliche Polyether. Die Polyether weisen zahlenmittlere Molekulargewichte Mₙ von 400 bis 13000 g/mol, bevorzugt 400 bis 2500 g/mol, insbesondere 500 bis 1200 g/mol und einen Gehalt an Hydroxylgruppen von 1 bis 25, bevorzugt 3 bis 15 Gew.-% auf.

(Meth)acrylat(co)polymerisate sind in der WO 03/000812 auf den Seiten 8 bis 16 ausführlich beschrieben und auf geeignete Herstellverfahren wird verwiesen, wobei erfindungsgemäß nur solche (Meth)acrylat(co)polymerisate geeignet sind, die mindestens eine Hydroxylgruppe aufweisen. Die (Meth)acrylat(co)polymerisate weisen bevorzugt zahlenmittlere Molekulargewichte Mₙ von 500 bis 10000 g/mol, insbesondere von 1000 bis 5000 g/mol und einen Gehalt an Hydroxylgruppen von 1 bis 20, insbesondere 3 bis 15 Gew.% auf.

Besonders bevorzugt werden in Komponente C) ein oder mehrere Verbindungen ausgewählt aus der Gruppe bestehend aus monomeren Di- und Triolen, davon abgeleiteten Polyethern sowie Polylactonen eines mittleren Molekulargewichts Mₙ < 1000 g/mol eingesetzt.

Als Verbindungen der Katalysatorkomponente D) können neben den erfindungsgemäß zu verwendenden Phenolaten grundsätzlich auch die dem Fachmann an sich bekannten Verbindungen zur Katalyse der Reaktion von Isocyanatgruppen mit isocyanatreaktiven Gruppen einzeln oder in beliebigen Mischungen untereinander verwendet werden.

Beispielhaft sind hier tert. Amine wie Triethylamin, Pyridin, Methylpyridin, Benzyl-dimethylamin, N,N-Endoethylenpiperazin, N-Methyl-piperidin, Pentamethyldiethy-len-triamin, N,N-Dimethylaminocyclohexan, N,N'-Dimethyl-piperazin, 1,4-Diazabicyclo[2.2.2]octan (DABCO) oder Metallsalze wie Eisen(III)-chlorid, Zinn(II)-octoat, Zinn(II)-ethyl-caproat, Zinn(II)-palmitat, Dibutylzinn-(IV)-dilaurat, Dibutylzinn(IV)-diacetat und Molybdänglykolat oder beliebige Gemische solcher Katalysatoren zu nennen.

Bevorzugt werden allerdings in D) ausschließlich Phenolate bzw. phenolatgruppenhaltige Verbindungen als Katalysatoren eingesetzt.

Die phenolatgruppenhaltigen Verbindungen der Komponente D) entsprechen bevorzugt der allgemeinen Formel (I), 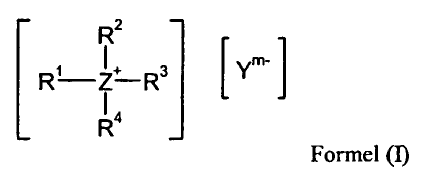 in welcher
Z für Stickstoff oder Phosphor steht,
R¹, R², R³, R⁴ unabhängig voneinander Wasserstoff oder gleiche oder verschiedene
   gegebenenfalls ungesättigte, substituententragende oder heteroatomhaltige aliphatische, cycloaliphatische oder aromatische Reste mit bis zu 24 Kohlenstoffatomen sind und
Y ein Phenolatrest der allgemeinen Formel (II) ist, 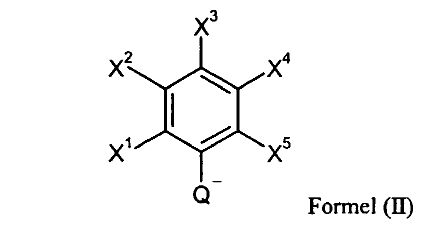 in welcher
Q für Sauerstoff steht,
X¹, X², X³, X⁴, X⁵ unabhängig voneinander Substituenten ausgewählt aus der Gruppe bestehend aus Wasserstoff, Halogen, Cyano-, Hydroxy-, Amid-, Amin-, Ether-, Ester-, Thioether-, Keton-, Aldehyd- und Carboxylatgruppe sowie gegebenenfalls ungesättigte, substituententragende oder heteroatomhaltige aliphatische, cycloaliphatische oder aromatische Reste mit bis zu 24 Kohlenstoffatomen sind und gegebenenfalls Teile cyclischer oder polycyclischer Systeme bilden.

Als phenolatgruppenhaltige Verbindungen der Formel (I) werden besonders bevorzugt Ammonium- und Phosphoniumphenolate, ganz besonders bevorzugt Tetraalkylammoniumphenolate und Tetraalkylphosphoniumphenolate eingesetzt.

Insbesondere bevorzugte Phenolate sind dabei Tetrabutylammonium-4-(methoxycarbonyl)-phenolat, Tetrabutylammonium-2-(methoxycarbonyl)phenolat, Tetrabutylammonium-4-formyl-phenolat, Tetrabutylammonium-4-nitrilphenolat, Tetrabutylphosphonium-4-(methoxycarbonyl)-phenolat, Tetrabutylphosphonium-2-(methoxycarbonyl)phenolat, Tetrabutylphosphonium-4-formylphenolat, Tetrabutylammonium-salicylat und/oder Tetrabutylphosphonium-salicylat.

Es ist auch möglich, die vorgenannten Phenolate der Komponente D) in situ während des Verfahrens zu erzeugen. Durch Einsatz der entsprechenden Phenole und starker Basen wie Tetrabutylammoniumhydroxid oder Tetrabutylphosphoniumhydroxid lassen sich die katalytisch aktiven Phenolate auch während des Verfahrens erzeugen.

Es sei an dieser Stelle noch darauf hingewiesen, dass auch phenolische Stabilisatoren der Komponente E) durch Reaktion mit Basen zu Phenolaten reagieren können, welche im Sinne der Komponente D) als Katalysatoren fungieren. Dabei ist darauf zu achten, dass solche Phenolate im Gegensatz zu den entsprechenden Phenolen keine stabilisierende Wirkung mehr besitzen. Weiterhin ist zu beachten, dass starke Basen wie Tetrabutylammoniumhydroxid oder Tetrabutylphosphoniumhydroxid die Bildung von anderen Isocyanatderivaten, insbesondere die Trimerisierung, katalysieren.

Es ist auch möglich die Katalysatoren D) nach dem Fachmann bekannten Methoden auf Trägermaterialien zu bringen und als heterogene Katalysatoren zu verwenden.

Die Verbindungen der Katalysatorkomponente D) können vorteilhaft in einer der im Verfahren beteiligten Komponenten oder einem Teil davon gelöst werden. Insbesondere lösen sich die erfindungsgemäß einzusetzenden Phenolatsalze zumeist gut in den polaren Hydroxyverbindungen, so dass D) gelöst in kleinen Mengen von C) als konzentrierte Lösung flüssig dosiert werden kann.

Im erfindungsgemäßen Verfahren wird die Katalysatorkomponente D) typischerweise in Mengen von 0,001 - 5,0 Gew.-%, bevorzugt 0,01- 2,0 Gew.-% und besonders bevorzugt 0,05 - 1,0 Gew.-% bezogen auf Festgehalt des Verfahrensprodukts eingesetzt.

Als Bestandteile der Komponente E) können im erfindungsgemäßen Verfahren beispielsweise auch Lösemittel oder Reaktivverdünner eingesetzt werden.

Geeignete Lösemittel sind gegenüber den vorhandenen funktionellen Gruppen des Verfahrensprodukts vom Zeitpunkt der Zugabe bis zum Ende des Verfahrens inert. Geeignet sind z.B. in der Lacktechnik verwendete Lösemittel wie Kohlenwasserstoffe, Ketone und Ester, z.B. Toluol, Xylol, Isooctan, Aceton, Butanon, Methylisobutylketon, Ethylacetat, Butylacetat, Tetrahydrofuran, N-Methylpyrrolidon, Dimethylacetamid, Dimethylformamid, wobei jedoch bevorzugt kein Lösungsmittel zugesetzt wird.

Als Reaktivverdünner können Verbindungen mitverwendet werden, die bei der UV-Härtung ebenfalls (co)polymerisieren und somit in das Polymernetzwerk mit einbauen. Werden diese schon mit den NCO-Gruppen-haltigen Verbindungen A) in Kontakt gebracht, so müssen sie gegenüber NCO-Gruppen inert sein. Werden sie erst nach der Umsetzung A) mit B) zugegeben, so gilt diese Einschränkung nicht. Reaktivverdünner sind beispielhaft in P. K. T. Oldring (Ed.), Chemistry & Technology of UV & EB Formulations For Coatings, Inks & Paints, Vol. 2, 1991, SITA Technology, London, S. 237 - 285 exemplarisch beschrieben. Dies können Ester der Acrylsäure oder Methacrylsäure, bevorzugt der Acrylsäure mit mono- oder mehrfachfunktionellen Alkoholen sein. Als Alkohole eignen sich beispielsweise die isomeren Butanole, Pentanole, Hexanole, Heptanole, Octanole, Nonanole und Decanole, weiterhin cycloaliphatische Alkohole wie Isobornyl, Cyclohexanol und alkylierte Cyclohexanole, Dicyclopentanol, arylaliphatischer Alkohole wie Phenoxyethanol und Nonylphenylethanol, sowie Tetrahydrofurfurylalkohole. Weiterhin können alkoxylierte Derivate dieser Alkohole verwendet werden. Geeignete zweiwertige Alkohole sind beispielsweise Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol oder auch alkoxylierte Derivate dieser Alkohole. Bevorzugte zweiwertige Alkohole sind Hexandiol-1,6, Dipropylenglykol und Tripropylenglykol. Geeignete dreiwertige Alkohole sind Glycerin oder Trimethylolpropan oder deren alkoxylierte Derivate. Vierwertige Alkohole sind Pentaerythrit oder dessen alkoxylierte Derivate.

Die erfindungsgemäßen Bindemittel müssen gegen vorzeitige Polymerisation stabilisiert werden. Daher gibt man als Bestandteil von Komponente E) vor und/oder während der Reaktion der Komponenten A)-D) bevorzugt phenolische Stabilisatoren zu, die die Polymerisation inhibieren. Verwendet werden dabei Phenole wie para-Methoxyphenol, 2,5-Di-tert.-Butylhydrochinon oder 2,6-Di-tert.-butyl-4-methylphenol. Geeignet sind auch N-Oxyl-Verbindungen zur Stabilisierung wie z.B. 2,2,6,6-Tetramethylpiperidin-N-Oxid (TEMPO) oder seine Derivate. Ebenso können die Stabilisatoren auch chemisch mit in das Bindemittel eingebaut werden, dabei eignen sich Verbindungen der oben genannten Klassen insbesondere wenn sie noch weitere freie aliphatische Alkoholgruppen oder primäre oder sekundäre Amingruppen tragen und damit über Urethan- oder Harnstoff-Gruppen chemisch an Verbindungen der Komponente A) gebunden werden können. Hierfür besonders geeignet sind 2,2,6,6-Tetramethyl-4-hydroxy-piperidin-N-Oxid. Bevorzugt sind als phenolische Stabilisatoren insbesondere para-Methoxyphenol und/oder 2,6-Di-tert.-butyl-4-methylphenol.

Andere Stabilisatoren wie z. B. Verbindungen der Klasse der HALS (HALS = hindered amine light stabilizers) werden dagegen weniger bevorzugt in E) eingesetzt, da sie bekanntermaßen keine so effektive Stabilisierung zu ermöglichen und vielmehr zu einer "schleichenden" radikalischen Polymerisation ungesättigter Gruppen führen können.

Zur Stabilisierung der Reaktionsmischung, insbesondere der ungesättigten Gruppen gegen vorzeitige Polymerisation, kann ein sauerstoffhaltiges Gas, bevorzugt Luft, in und/oder über das Reaktionsgemisch geleitet werden. Es ist bevorzugt, dass das Gas einen möglichst geringen Anteil an Feuchtigkeit besitzt, um unerwünschte Reaktion bei Vorhandensein von freien Isocyanatgruppen zu verhindern.

In der Regel wird während der Herstellung der erfindungsgemäßen Bindemittel ein Stabilisator zugesetzt und abschließend um eine Langzeitstabilität zu erreichen nochmals mit einem phenolischen Stabilisator nachstabilisiert und ggf. mit Luft das Reaktionsprodukt gesättigt.

Im erfindungsgemäßen Verfahren wird die Stabilisatorkomponente typischerweise in Mengen von 0,001 - 5,0 Gew.-%, bevorzugt 0,01 - 2,0 Gew.-% und besonders bevorzugt 0,05 - 1,0 Gew.-% bezogen auf Festgehalt des Verfahrensprodukts eingesetzt.

Das erfindungsgemäße Verfahren wird in der Reihenfolge durchgeführt, dass zunächst A) mit B) bis zum vollständigem Umsatz der NCO-Gruppen durchgeführt wird. Das entstehende Zwischenprodukt kann gegebenenfalls gelagert und/oder transportiert werden. Es schließt sich dann die Umsetzung der Uretdiongruppen mit der Komponente C) an.

Das Verhältnis von NCO-Gruppen in A) und NCO-reaktiven Gruppen in B) beträgt von 1:1 bis 1:1,5, bevorzugt 1:1 bis 1:1,2, insbesondere 1:1. Das Verhältnis von Uretdiongruppen in A) zu Hydroxylgruppen in C) beträgt 1:0,4 bis 1:6, bevorzugt 1:0,9 bis 1:4, insbesondere 1:0,9 bis 1:2. Wesentlich ist zusätzlich, dass die Summe der NCO-Gruppen und Uretdiongruppen in A) die der mit NCO-Gruppen- und Uretdiongruppen-reaktiven Gruppen in B) übersteigt.

Je nach den gewählten Verhältnissen der Komponenten A)-C) werden Verfahrensprodukte erhalten, die entweder frei von isocyanatreaktiven Gruppen wie OH-Gruppen sind oder solche noch enthalten.

Das erfindungsgemäße Verfahren wird bevorzugt bei Temperaturen von 20 bis 100°C, besonders bevorzugt von 40 bis 90°C durchgeführt. Insbesondere wird die Umsetzung der Uretdiongruppen mit den Hydroxylgruppen bei 60 bis 90°C durchgeführt.

Die Viskosität der erfindungsgemäß erhältlichen Bindemittel hängt insbesondere von Funktionalität, Molekulargewicht und chemischer Natur der verwendeten Komponente C) sowie von den verwendeten stöchiometrischen Verhältnissen ab. Werden beispielsweise die bevorzugten monomere Di- oder Triole, sowie davon abgeleitete Polyether und/oder Polylactone eines mittleren Molekulargewichts unter 1000 g/mol verwendet, so resultieren bevorzugt Bindemittel einer Viskosität bei 23°C von unter 100.000 mPas, besonders bevorzugt unter 75.000 mPas, ganz besonders bevorzugt unter 40.000 mPas. Das zahlenmittlere Molekulargewicht beträgt bevorzugt von 500 bis 5000, insbesondere 800 bis 2000 g/mol.

Es ist unerheblich, ob das erfindungsgemäßen Verfahren kontinuierlich z.B. in einem StatikMischer oder diskontinuierlich z.B. in einem Rührreaktor durchgeführt wird.

Bevorzugt wird das erfindungsgemäße Verfahren in einem Rührreaktor durchgeführt, wobei die Reihenfolge der Zugabe der Komponenten A) und B) im ersten Verfahrensschritt und die des Zwischenprodukts aus A) und B) mit C) im zweiten Verfahrensschritt beliebig ist. Die Zugabe der in E) enthaltenen Stabilisatoren erfolgt bevorzugt bevor die Komponente B) einer thermischen Belastung ausgesetzt wird. Die anderen Teile der Komponente E) können zu einem beliebigen Zeitpunkt zugegeben werden. Die Phenolatverbindungen von D) werden bevorzugt erst nach Herstellung des Zwischenprodukts aus A) und B) zugefügt.

Der Verlauf der Reaktion kann durch geeignete im Reaktionsgefäß installierte Meßgeräte und/oder anhand von Analysen an entnommenen Proben verfolgt werden. Geeignete Verfahren sind dem Fachmann bekannt. Es handelt sich beispielsweise um Viskositätsmessungen, Messungen des Brechungsindex, des OH-Gehalts, Gaschromatographie (GC), kernmagnetische Resonanzspektroskopie (NMR), Infrarotspektroskopie (IR) und nahe Nahinfrarotspektroskopie (NIR). Bevorzugt ist die IR-Kontrolle auf ggf. vorhandene freie NCO Gruppen (für aliphatische NCO-Gruppen, Bande bei ca. ν = 2272 cm⁻¹) sowie insbesondere auf Uretdiongruppen (z.B. Bande für Uretdione auf Basis Hexamethylendiisocyanat bei ν = 1761 cm⁻¹) und GC-Untersuchungen auf nicht umgesetzte Verbindungen aus B) und C). Es ist möglich die Umsetzung der Uretdiongruppen mit den Hydroxylgruppen nicht vollständig durchzuführen, sondern bei Erreichen eines bestimmten Umsatzes abzubrechen. Eine weitere (schleichende) Reaktion kann dann durch Zusatz von sauren Agenzien, wie sie beispielsweise für die Stabilisierung von Isocyanatgruppen dem Fachmann bekannt sind, unterbunden werden. Insbesondere kommen in Betracht Säuren oder Säurederivate, z.B. Benzoylchlorid, Phthaloylchlorid, phosphinige, phosphonige und/oder phosphorige Säure, Phosphin-, Phosphon- und/oder Phosphorsäure sowie die sauren Ester der letztgenannten 6 Säuretypen, Schwefelsäure und ihre sauren Ester und/oder Sulfonsäuren.

Die erfindungsgemäßen Bindemittel können zur Herstellung von Beschichtungen und Lacken sowie Klebstoffen, Druckfarben, Gießharzen, Dentalmassen, Schlichten, Photoresisten, Stereolithographiesystemen, Harzen für Verbundwerkstoffe und Dichtungsmassen verwendet werden. Im Falle der Verklebung oder Abdichtung ist allerdings Voraussetzung, dass bei UV-Strahlenhärtung mindestens eines der beiden zu verklebenden oder miteinander abzudichtenden Substrate für UV-Strahlung durchlässig, also i. d. R. transparent sein muss. Bei der Elektronenstrahlung ist auf eine hinreichende Durchlässigkeit für Elektronen zu achten. Bevorzugt ist die Verwendung in Lacken und Beschichtungen.

Ein weiterer Gegenstand der Erfindung sind Beschichtungsmittel enthaltend
a) ein oder mehrere erfindungsgemäß erhältliche Bindemittel,
b) gegebenenfalls ein oder mehrere Polyisocyanate mit freien oder blockierten Isocyanatgruppen, die gegebenfalls unter Einwirkung aktinischer Strahlung mit ethylenisch ungesättigten Verbindungen unter Polymerisation reagierende Gruppen enthalten,
c) gegebenenfalls weitere von denen aus a) verschiedene Verbindungen, die unter Einwirkung aktinischer Strahlung mit ethylenisch ungesättigten Verbindungen unter Polymerisation reagierende Gruppen und gegebenenfalls mit NCO-Gruppen reaktive Gruppen aufweisen,
d) gegebenenfalls ein oder mehrere mit Isocyanaten reagierende, aktiven Wasserstoff enthaltende Verbindungen, die frei sind von unter Einwirkung aktinischer Strahlung mit ethylenisch ungesättigten Verbindungen unter Polymerisation reagierenden Gruppen,
e) Initiatoren,
f) gegebenenfalls Hilfs- und Zusatzstoffe.

Polyisocyanate b) sind aromatische, araliphatische, aliphatische oder cycloaliphatische Di- oder Polyisocyanate. Es können auch Mischungen solcher Di- oder Polyisocyanate eingesetzt werden.

Beispiele geeigneter Di- oder Polyisocyanate sind Butylendiisocyanat, Hexamethylendiisocyanat (HDI), Isophorondiisocyanat (IPDI), 2,2,4- und/oder 2,4,4-Trimethylhexamethylendiisocyanat, die isomeren Bis(4,4`-isocyanatocyclohexyl)methane oder deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, Triphenylmethan-4,4',4"-triisocyanat oder deren Derivate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur und Mischungen derselben. Bevorzugt sind Polyisocyanate auf Basis oligomerisierter und/oder derivatisierter Diisocyanate, die durch geeignete Verfahren von überschüssigem Diisocyanat befreit wurden, insbesondere die des Hexamethylendiisocyanat, Isophorondiisocyanat und der isomeren Bis(4,4'-isocyanatocyclohexyl)methane sowie deren Mischungen. Besonders bevorzugt sind die oligomeren Isocyanurate und Iminooxadiazindione des HDI und deren Mischungen sowie die oligomeren Isocyanurate des IPDI.

Es ist gegebenenfalls auch möglich, die vorgenannten Isocyanate mit dem Fachmann aus der Beschichtungstechnologie bekannten Verbindungen blockiert einzusetzen. Als Beispiel für Blockierungsmittel seien genannt: Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam, N-tert.-Butyl-benzylamin, Cyclopentanoncarboxyethylester oder beliebige Gemische dieser Blockierungsmittel.

Die Polyisocyanate b) können gegebenenfalls eine oder mehrere funktionelle Gruppen enthalten, die unter Einwirkung aktinischer Strahlung mit ethylenisch ungesättigten Verbindungen unter Polymerisation reagieren. Diese Gruppen können durch Reaktion der unter B) genannten ungesättigten und isocyanatreaktiven Verbindungen einschließlich der Vorzugsbereiche mit gesättigten Polyisocyanaten nach an sich bekannten Methoden hergestellt werden. Solche NCO-haltigen Urethanacrylate sind kommerziell bei Bayer AG, Leverkusen, DE als Roskydal^{®} UA VP LS 2337, Roskydal^{®} UA VP LS 2396 oder Roskydal^{®} UA XP 2510 erhältlich.

Als Verbindungen der Komponente c) können Polymere wie Polyacrylate, Polyurethane, Polysiloxane, Polyester, Polycarbonate, Polyether, die Gruppen enthalten, die durch Einwirkung aktinischer Strahlung mit ethylenisch ungesättigten Verbindungen unter Polymerisation reagieren, eingesetzt werden. Solche Gruppen sind α,β-ungesättigte Carbonsäurederivate wie Acrylate, Methacrylate, Maleinate, Fumarate, Maleimide, Acrylamide, weiterhin Vinylether, Propenylether, Allylether und Dicyclopentadienyl-Einheiten enthaltende Verbindungen. Bevorzugt sind Acrylate und Methacrylate. Beispiele beinhalten die in der Technologie der Strahlenhärtung bekannten und unter E) exemplarisch beschriebenen Reaktivverdünner (vgl. Römpp Lexikon Chemie, S.491, 10. Aufl. 1998, Georg-Thieme-Verlag, Stuttgart) oder die in der Technologie der Strahlenhärtung bekannten Bindemittel wie Polyetheracrylate, Polyesteracrylate, Urethanacrylate, Epoxyacrylate, Melaminacrylate, Silikonacrylate, Polycarbonatacrylate und acrylierte Polyacrylate, die gegebenenfalls Isocyanat-reaktive Gruppen insbesondere Hydroxylgruppen aufweisen.

Geeignete Verbindungen d) sind beispielsweise die unter C) beschriebenen hydroxyfunktionellen monomeren oder polymeren Verbindungen zusätzlich auch Wasser, das gegebenenfalls auch in Form von Luftfeuchtigkeit erst nach dem Beschichten mit den übrigen Bestandteilen in Kontakt gebracht wird. Weiterhin können NH-funktionelle Verbindungen wie Amin-terminierte Polyether, Polyamine und Asparaginate verwendet werden.

Als Initiatoren der Komponente e) für eine radikalische Polymerisation können durch Strahlung und/oder thermisch aktivierbare Initiatoren zum Einsatz kommen. Fotoinitiatoren, die durch UV-oder sichtbares Licht aktiviert werden, sind hierbei bevorzugt. Fotoinitiatoren sind an sich bekannte, kommerziell vertriebene Verbindungen, wobei zwischen unimolekularen (Typ I) und bimolekularen (Typ II) Initiatoren unterschieden wird. Geeignete (Typ I)-Systeme sind aromatische Ketonverbindungen, z.B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide z.B. 2,4,6-Trimethyl-benzoyldiphenylphosphinoxid, Bisacylphosphinoxide, Phenylglyoxylsäureester, Campherchinon, α-Aminoalkylphenone, α,α-Dialkoxyacetophenone und α-Hydroxyalkylphenone.

Die Initiatoren, die in Mengen zwischen 0,1 und 10 Gew.-%, vorzugsweise 0,1 bis 5 Gew.-%, bezogen auf das Gewicht des Lackbindemittels, eingesetzt werden, können als einzelne Substanz oder, wegen häufiger vorteilhafter synergistischer Effekte, auch in Kombination miteinander verwendet werden.

Werden Elektronenstrahlen statt UV-Strahlung verwendet, so benötigt man keinen Photoinitiator. Elektronenstrahlung wird wie dem Fachmann bekannt ist, mittels thermischer Emission erzeugt und über eine Potentialdifferenz beschleunigt. Die energiereichen Elektronen schlagen dann durch eine Titanfolie und werden auf die zu härtenden Bindemittel gelenkt. Die allgemeinen Prinzipien der Elektronenstrahlhärtung sind in "Chemistry & Technology of UV & EB Formulations for Coatings, Inks & Paints", Vol. 1, P.K.T Oldring (Ed.), SITA Technology, London, England, S. 101-157, 1991 im Detail beschrieben.

Im Falle einer thermischen Härtung der aktivierten Doppelbindungen, kann diese auch unter Zusatz von thermisch zerfallenden Radikalbildnern erfolgen. Geeignet sind, wie dem Fachmann bekannt ist, z.B. Peroxyverbindungen wie Dialkoxydicarbonate wie z.B. Bis(4-tert-butylcyclohexyl)-peroxydicarbonat, Dialkylperoxide wie z.B. Dilaurylperoxid, Perester aromatischer oder aliphatischer Säuren wie z.B. tert.-Butylperbenzoat oder tert.-Amylperoxy-2-ethylhexanoat, anorganische Peroxide wie z. B. Ammoniumperoxodisulfat, Kaliumperoxodisulfat, organische Peroxide wie z.B. 2,2-Bis(tert.-butylperoxy)butan, Dicumylperoxid, tert.-Butylhydroperoxid oder auch Azoverbindungen wie 2,2'-Azobis[N-(2-propenyl)-2-methylpropionamide], 1-[(cyano-1-methylethyl)azo]formamide, 2,2'-Azobis(N-butyl-2-methylpropionamide), 2,2'-Azobis(N-cyclohexyl-2-methylpropionamide), 2,2'-Azobis(2-methyl-N-[2-(1-hydroxybutyl)]propionamide), 2,2'-Azobis{2-methyl-N-[2-(1-hydroxybutyl)]propionamide, 2,2'-Azobis{2-methyl-N-[1,1-bis(hydroxymethyl)-2-hydroxyethyl]propionamide. Möglich sind auch hochsubstituierte 1,2-Diphenylethane (Benzpinakole), wie z. B. 3,4-Dimethyl-3,4-diphenylhexan, 1,1,2,2-Tetraphenyl-ethandiol-1,2 oder auch deren silylierten Derivate.

Es ist auch möglich eine Kombination von durch UV-Licht und thermisch aktivierbaren Initiatoren zu verwenden.

Zu den Hilfs- und Zusatzstoffen der Komponente f) gehören Lösemittel der vorstehend unter E) genannten Art.

Des Weiteren können in f) zur Erhöhung der Wetterstabilität der gehärteten Lackschicht auch UV-Absorber und/oder HALS-Stabilisatoren enthalten sein. Bevorzugt ist die Kombination. Erstere sollten einen Absorptionsbereich von maximal 390 nm haben wie Triphenyltriazintypen (z.B. Tinuvin^{®} 400 (Ciba Spezialitätenchemie GmbH, Lampertheim, DE)), Benztriazole wie Tinuvin® 622 (Ciba Spezialitätenchemie GmbH, Lampertheim, DE) oder Oxalsäuredianilide (z. B. Sanduvor^{®} 3206 (Clariant, Muttenz, CH) ) und werden in 0,5 - 3,5 Gew.-% bezogen auf Festharz zugegeben. Geeignete HALS-Stabilisatoren sind kommerziell erhältlich (Tinuvin^{®} 292 oder Tinuvin^{®} 123 (Ciba Spezialitätenchemie GmbH, Lampertheim, DE) oder Sanduvor^{®} 3258 (Clariant, Muttenz, CH). Bevorzugte Mengen sind 0,5-2,5 Gew.-% bezogen auf Festharz.

Ebenfalls können in f) Pigmente, Farbstoffe, Füllstoffe, Verlaufs- und Entlüftungsadditive enthalten sein.

Darüber hinaus können, sofern erforderlich die aus der Polyurethanchemie bekannten Katalysatoren zur Beschleunigung der NCO/OH-Reaktion in f) enthalten sein. Dies sind z.B. Zinnoder Zinksalze oder Zinnorganoverbindungen, Zinn- und/oder Zinkseifen wie z.B. Zinnoctoat, Dibutylzinndilaurat, Dibutylzinnoxid, tertiäre Amine wie z. B. Diazabicyclo[2,2,2]octan (DABCO), Wismuth-, Zirkon- oder Molybdänverbindungen.

Das Auftragen der erfindungsgemäßen Beschichtungsmittel auf das zu beschichtende Material erfolgt mit den in der Beschichtungstechnologie üblichen und bekannten Methoden wie Spritzen, Rakeln, Walzen, Gießen, Tauchen, Schleudern, Streichen oder Sprühen oder durch Druck-Techniken wie Sieb-, Tief-, Flexo- oder Offsetdruck sowie durch Transfer-Methoden.

Geeignete Substrate sind beispielsweise Holz, Metall, insbesondere auch Metall wie es in den Anwendungen der sogenannten Draht-, Coil-, Can- oder Container-Lackierung verwendet wird, weiterhin Kunststoff auch in Form von Folien, insbesondere ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM, und UP (Kurzbezeichnungen nach DIN 7728T1), Papier, Leder, Textilien, Filz, Glas, Holz, Holzwerkstoffe, Kork, anorganisch gebundene Substrate wie Holz- und Faserzementplatten, elektronische Baugruppen oder mineralische Untergründe. Es können auch Substrate, die aus verschiedenen der vorgenannten Materialien bestehen, oder bereits beschichtete Substrate wie Fahrzeuge, Flugzeuge oder Schiffe sowie deren Teile, insbesondere Karosserien oder Anbauteile lackiert werden. Es ist auch möglich die Beschichtungsmittel nur temporär auf ein Substrat aufzubringen, dann teilweise oder vollständig zu härten und gegebenenfalls wieder abzulösen, um z.B. Folien herzustellen.

Zur Aushärtung können durch Ablüften z.B. enthaltene Lösemittel ganz oder teilweise entfernt werden.

Anschließend oder gleichzeitig können der oder die ggf. notwendigen thermischen und die photochemischen Aushärtungsprozesse nacheinander oder gleichzeitig durchgeführt werden.

Falls notwendig kann die thermische Härtung bei Raumtemperatur aber auch bei erhöhter Temperatur, vorzugsweise bei 40 bis 160°C, bevorzugt bei 60 bis 130°C, besonders bevorzugt bei 80 bis 110°C erfolgen.

Bei Verwendung von Photoinitiatoren in e) erfolgt die Strahlungshärtung bevorzugt durch Einwirkung energiereicher Strahlung, also UV-Strahlung oder Tageslicht, z.B. Licht der Wellenlänge 200 bis 700 nm oder durch Bestrahlen mit energiereichen Elektronen (Elektronenstrahlung, 150 bis 300 keV). Als Strahlungsquellen für Licht oder UV-Licht dienen beispielsweise Hoch- oder Mitteldruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Eximerstrahler sind ebenfalls möglich. Die Strahler können bauartbedingt oder durch Einsatz spezieller Filter und/oder Reflektoren so ausgestattet sein, das der Austritt eines Teils des UV-Spektrums verhindert wird. Beispielsweise kann z.B. aus arbeitshygienischen Gründen die dem UV-C oder UV-C und UV-B zugeordnete Strahlung herausgefiltert werden. Die Strahler können ortsunbeweglich installiert sein, so dass das zu bestrahlende Gut mittels einer mechanischen Vorrichtung an der Strahlungsquelle vorbeibewegt wird oder die Strahler können beweglich sein und das zu bestrahlende Gut verändert bei der Härtung seinen Ort nicht. Die üblicherweise zur Vernetzung ausreichende Strahlungsdosis bei UV-Härtung liegt im Bereich von 80 bis 5000 mJ/cm².

Die Bestrahlung kann gegebenenfalls auch unter Ausschluss von Sauerstoff, z. B. unter InertgasAtmosphäre oder Sauerstoff-reduzierter Atmosphäre durchgeführt werden. Als Inertgase eignen sich bevorzugt Stickstoff, Kohlendioxid, Edelgase oder Verbrennungsgase. Des Weiteren kann die Bestrahlung erfolgen, indem die Beschichtung mit für die Strahlung transparenten Medien abgedeckt wird. Beispiele hierfür sind z.B. Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise zu variieren.

Besonders bevorzugt werden zur Härtung Quecksilberhochdruckstrahler in ortsfesten Anlagen eingesetzt. Fotoinitiatoren werden dann in Konzentrationen von 0,1 bis 10 Gew.%, besonders bevorzugt 0,2 bis 3,0 Gew.-% bezogen auf den Festkörper der Beschichtung eingesetzt. Zur Härtung dieser Beschichtungen wird bevorzugt eine Dosis von 200 bis 3000 mJ/cm² gemessen im Wellenlängebereich von 200 bis 600 nm verwendet.

Bei Verwendung von thermisch aktivierbaren Initiatoren in e) durch Erhöhung der Temperatur. Die thermische Energie kann dabei durch Strahlung, Wärmeleitung und/oder Konvektion in die Beschichtung eingebracht werden, wobei üblicherweise die in der Beschichtungstechnologie gebräuchlichen Infrarot-Strahler, Nahinfrarotstrahler und/oder Öfen zum Einsatz kommen.

Die applizierten Schichtdicken (vor der Härtung) liegen typischerweise zwischen 0,5 und 5000 µm, bevorzugt zwischen 5 und 1000 µm, besonders bevorzugt zwischen 1 und 200 µm. Bei Verwendung von Lösungsmitteln werden diese nach der Applikation und vor der Härtung durch die gängigen Methoden entfernt.

### Beispiele

Alle Prozentangaben beziehen sich sofern nicht abweichend angegeben auf Gewichtsprozent.

Die Bestimmung der NCO-Gehalte in % wurde über Rücktitration mit 0,1 mol/l Salzsäure nach Reaktion mit Butylamin vorgenommen, Grundlage DIN EN ISO 11909.

Die Viskositätsmessungen wurden mit einem Kegelplatte Viskosimeter (SM-KP), Viskolab LC3/ISO der Fa. Paar Physica, Ostfildern, DE nach ISO/DIS 3219:1990 durchgeführt.

Infrarot-Spektroskopie wurde an zwischen Natriumchloridplatten aufgetragenen Flüssigkeitsfilmen an einem Gerät Modell 157 von Perkin Elmer, Überlingen, DE.

Gehalt an Restmonomeren bzw. flüchtiger Aufbaukomponenten wurde mittels GC (Methode mit Tetradekan als internem Standard, Ofentemperatur 110°C, Injektortemperatur 150°C, Trägergas Helium, Gerät: 6890 N, Agilent, Waldbronn, DE, Säule: Restek RT 50, 30 m, 0,32 mm Innendurchmesser, Filmdicke 0,25 µm) analysiert.

Die Bestimmung des Festkörpers erfolgte nach DIN 53216/1 Entwurf 4/89, ISO 3251.

Die zur Zeit der Versuchsdurchführung herrschende Umgebungstemperatur von 23°C wird als RT bezeichnet.

Desmodur^{®} N 3400: HDI-Polyisocyanat vorwiegend enthaltend Uretdionstruktur, Viskosität 185 mPas/23°C, NCO-Gehalt 21,4 %, Handelsprodukt der Bayer AG, Leverkusen, DE

Desmorapid^{®} Z: Dibutylzinndilaurat (DBTL), Handelsprodukt der Bayer AG, Leverkusen, DE

Darocur^{®} 1173: Photoinitiator, Handelsprodukt der Ciba Spezialitätenchemie GmbH, Lampertheim, DE

Desmophen^{®} 850: linearer, hydroxylgruppenhaltiger Polyester, lösemittelfrei, Hydroxylgehalt 8,5 %, Äquivalentgewicht 200 g/Eq, Viskosität (in Verdünnung mit Methoxypropylacetat auf 75 % Festgehalt) 850 mPa s bei 23°C.

Die Beispiel 1 beschreibt die Herstellung eines geeigneten katalytisch aktiven Phenolats, das in den erfindungsgemäßen Beispielen 2 - 6 eingesetzt wurde.

### Beispiel 1: Tetrabutylammonium-salicylat

In einem Glaskolben mit Rückflusskühler, beheizbarem Ölbad, mechanischem Rührer und Innenthermometer wurden bei Raumtemperatur 35,90 g Salicylsäureethylester und 282,13 g Wasser vorgelegt und gut verrührt. Anschließend wurden 139,98 g Tetrabutylammoniumhydroxid (40%ig in Wasser) zugegeben und auf 60°C aufgeheizt. Das Reaktionsgemisch wurde eine Stunde bei 60°C gerührt (Kolbeninhalt wurde klar). Dann wurde das Reaktionsgemisch abgekühlt und das Wasser wurde unter Vakuum, 20 mbar, bei 30-45°C abdestilliert. Der Rückstand wurde in 200 ml Toluol bei 60°C aufgenommen. Anschließend wurde erneut abdestilliert. Der Rückstand wurde aus 50 ml Butylacetat umkristallisiert. Das Produkt wurde abfiltriert, mit Butylacetat gewaschen und im Vakuumtrockenschrank bei 80°C und 10 mbar trocknet. Es wurde ein weißer Feststoff mit einem Schmelzpunkt von 93°C erhalten.

### Beispiel 2: Erfindungsgemäßes allophanathaltiges Bindemittel

In einem Dreihalskolben mit Rückflusskühler, Rührer, Tropftrichter und Luftdurchleitung (6 l/h) wurden 47,02 g Desmodur^{®} N3400, 0,10 g 2,6-Di-tert.-butyl-4-methylphenol und 0,001 g Desmorapid^{®} Z bei RT vorgelegt und dann auf 60°C erhitzt. 28,00 g 2-Hydroxyethylacrylat wurden langsam zugetropft, wobei eine maximale Temperatur von 70°C erreicht wurde. Danach wurde das Reaktionsgemisch bei 70°C gehalten, bis der NCO-Gehalt < 0,1 %. Anschließend wurden 20,00 g Butylacetat sowie 4,42 g Trimethylopropan zugefügt und im Reaktionsgemisch gelöst. Es wurden 0,41 g des Katalysators nach Beispiel 1 zugefügt. Das Reaktionsgemisch wurde aufgeheizt und bei 80°C gehalten, bis im IR-Spektrum bei v = 1768 cm⁻¹ nach 5,5 h nur ein sehr schwaches Signal für Uretdiongruppen nachweisbar war. Es wurde ein klares Produkt mit einer Viskosität von 8700 mPas/23°C bei einem Festgehalt von 81,8 % und einem NCO-Gehalt von 0 % erhalten.

Die Beispiele 3 - 6 wurden analog Beispiel 2 durchgeführt. Es wurden dabei die in der folgenden Tabelle aufgeführten Mengen in [g] eingesetzt.

| **Beispiel** | **2** | **3** | **4** | **5** | **6** |
|---|---|---|---|---|---|
| Desmodur^{®} N3400 | 47,02 | 45,93 | 43,89 | 41,78 | 20,12 |
| 2-Hydroxyethylacrylat | 28,00 | 27,35 | 26,14 | 24,88 | 11,45 |
| Butylacetat | 20,00 | 20,00 | 20,00 | 20,00 | 20,92 |
| Trimethylolpropan | 4,42 | 6,16 | - | - | - |
| Ethoxiliertes Trimethylolpropan* | - | - | 9,42 | 12,79 | - |
| Desmophen^{®} 850 | - | - | - | - | 51,10 |
| Katalysator Bsp.1 | 0,41 | 0,41 | 0,41 | 0,41 | 0,76 |
| Reaktionszeit nach Zugabe Katalysator Bsp. 1 | 5,5 h | 2,0 h | 13,0 h | 4,0 h | 15,0 h |
| Festgehalt | 81,8 | 81,1 | 81,3 | 80,6 | 81,9 |
| Viskosität bei 23 °C | 8700 | 4180 | 5350 | 2250 | 2350 |

| | | | | | |
|---|---|---|---|---|---|
| *) im Mittel 4fach ethoxilierter, Trimethylolpropan gestarteter Polyether (Hydroxylzahl 550, dynamische Viskosität 505 mPa·s bei 23°C) | | | | | |

### Vergleichsbeispiel 1 und 2: Versuch der Herstellung eines allophanathaltigen Bindemittels

Die in US-A 2003 01 537 13 für die Vernetzung von Pulverlacken aus Uretdiongruppen-haltigen Härtern und polymeren Hydroxylverbindungen ohne aktivierte Doppelbindungen beschriebenen Katalysatoren wurden auf Eignung überprüft:
Vergleichsbeispiel V1: Beispiel 2 wurde mit dem Unterschied wiederholt, dass hier anstelle des Katalysators aus Beispiel 1 die gleiche molare Menge Tetrabutylammoniumhydroxid verwendet wurde.
Vergleichsbeispiel V2: Beispiel 2 wurde mit dem Unterschied wiederholt, dass hier anstelle des Katalysators aus Beispiel 1 die gleiche molare Menge Tetrabutylammoniumfluorid verwendet wurde.

| **Beispiel** | **2** | **V1** | **V2** |
|---|---|---|---|
| Reaktionszeit nach Zugabe des Katalysators | 5,5 h | 2,5 h | 2,0 h |
| Visuelle Beurteilung | Klar | Starke Trübung | Starke Trübung |
| Festgehalt [%] | 81,8 | 81,7 | 82,2 |
| Viskosität [mPa s]bei 23 °C | 8700 | 12000 | 16000 |

Der Vergleich zeigt, dass die Produkte nach Vergleichsbeispiel V1 und V2 höhere Viskositäten aufweisen und aufgrund der auftretenden deutlichen Trübung als Beschichtungsmittel nicht zu verwenden sind.

## Patentansprüche

1. Verfahren zur Herstellung allophanatgruppenhaltiger Bindemittel, die unter Einwirkung aktinischer Strahlung mit ethylenisch ungesättigten Verbindungen unter Polymerisation reagierende Gruppen und gegebenenfalls auch NCO-reaktive Gruppen aufweisen, bei dem
A) eine oder mehrere uretdiongruppenhaltige und NCO-funktionelle Verbindungen zunächst mit
B) einer oder mehreren Verbindungen, die gegenüber Isocyanaten reaktive Gruppen und unter Einwirkung aktinischer Strahlung mit ethylenisch ungesättigten Verbindungen unter Polymerisation reagierende Gruppen aufweisen und dann
C) mit einer oder mehreren von B) verschiedenen hydroxylgruppenhaltigen Verbindungen, wobei wenigstens eine dieser Verbindungen eine OH-Funktionalität von ≥ 2 aufweist,
D) in Anwesenheit einer oder mehrerer phenolatgruppenhaltiger Verbindungen als Katalysatoren und
E) optional Hilfs- und Zusatzstoffen
umgesetzt werden, wobei die Umsetzung mit Verbindungen der Komponente C) zumindest anteilig unter Bildung von Allophanatgruppen verläuft.

2. Verfahren zur Herstellung allophanatgruppenhaltiger Bindemittel gemäß Anspruch 1, **dadurch gekennzeichnet, dass** die uretdiongruppenhaltigen Verbindungen der Komponente A) auf Hexamethylendiisocyanat basieren.

3. Verfahren zur Herstellung allophanatgruppenhaltiger Bindemittel gemäß Anspruch 1 oder 2, **dadurch gekennzeichnet, dass** in Komponente B) 2-Hydroxyethylacrylat, 2-Hydroxypropylacrylat, 4-Hydroxybutylacrylat, Polyethylenoxid-mono(meth)acrylat, Polypropylenoxidmono(meth)acrylat und/oder die Umsetzungsprodukte von Acrylsäure mit Glycidylmethacrylat eingesetzt werden.

4. Verfahren zur Herstellung allophanatgruppenhaltiger Bindemittel gemäß einem der Ansprüche 1 bis 3, **dadurch gekennzeichnet, dass** in Komponente C) ein oder mehrere Verbindungen ausgewählt aus der Gruppe bestehend aus monomeren Di- und Triolen, davon abgeleiteten Polyethern sowie Polylactonen eines mittleren Molekulargewichts Mₙ < 1000 g/mol eingesetzt werden.

5. Verfahren zur Herstellung allophanatgruppenhaltiger Bindemittel gemäß einem der Ansprüche 1 bis 4, **dadurch gekennzeichnet, dass** in Komponente D) als Katalysator Tetrabutylammonium-4-(methoxycarbonyl)phenolat, Tetrabutylammonium-2-(methoxycarbonyl)phenolat, Tetrabutylammonium-4-formylphenolat, Tetrabutylammonium-4-nitrilphenolat, Tetrabutylphosphonium-4-(methoxycarbonyl)phenolat, Tetrabutylphosphonium-2-(methoxycarbonyl)phenolat, Tetrabutylphosphonium-4-formylphenolat, Tetrabutylammonium-salicylat und/oder Tetrabutylphosphonium-salicylat verwendet wird.

6. Verfahren zur Herstellung allophanatgruppenhaltiger Bindemittel gemäß einem der Ansprüche 1 bis 5, **dadurch gekennzeichnet, dass** die Verfahrenstemperaturen 20 bis 100°C betragen.

7. Allophanatgruppenhaltige Bindemittel mit aktivierten unter Einwirkung aktinischer Strahlung mit ethylenisch ungesättigten Verbindungen unter Polymerisation reagierenden Gruppen, die nach einem Verfahren gemäß einem der Ansprüche 1 bis 6 erhältlich sind.

8. Beschichtungsmittel enthaltend
a) ein oder mehrere allophanatgruppenhaltige Bindemittel gemäß Anspruch 7,
b) gegebenenfalls ein oder mehrere Polyisocyanate mit freien oder blockierten Isocyanatgruppen, die gegebenenfalls unter Einwirkung aktinischer Strahlung mit ethylenisch ungesättigten Verbindungen unter Polymerisation reagierende Gruppen enthalten,
c) gegebenenfalls weitere von denen aus a) verschiedene Verbindungen, die unter Einwirkung aktinischer Strahlung mit ethylenisch ungesättigten Verbindungen unter Polymerisation reagierende Gruppen und gegebenenfalls mit NCO-Gruppen reaktive Gruppen aufweisen,
d) gegebenenfalls ein oder mehrere mit Isocyanaten reagierende, aktiven Wasserstoff enthaltende Verbindungen, die frei sind von unter Einwirkung aktinischer Strahlung mit ethylenisch ungesättigten Verbindungen unter Polymerisation reagierenden Gruppen,
e) Initiatoren,
f) gegebenenfalls Hilfs- und Zusatzstoffe.

9. Substrate beschichtet mit Beschichtungen erhältlich aus allophanatgruppenhaltigen Bindemitteln gemäß Anspruch 7.

## Claims

1. Process for the preparation of binders containing allophanate groups and having groups that react with ethylenically unsaturated compounds by polymerization under the action of actinic radiation, and optionally also NCO-reactive groups, wherein
A) one or more NCO-functional compounds containing uretdione groups are reacted firstly with
B) one or more compounds which have isocyanate-reactive groups and groups that react with ethylenically unsaturated compounds by polymerization under the action of actinic radiation, and then with
C) one or more compounds containing hydroxyl groups, which are different from B), at least one of these compounds having an OH functionality of ≥ 2,
D) in the presence of one or more compounds containing phenate groups, as catalysts, and
E) optionally auxiliary substances and additives,
the reaction with compounds of component C) proceeding at least partially with the formation of allophanate groups.

2. Process for the preparation of binders containing allophanate groups according to Claim 1, **characterized in that** the compounds containing uretdione groups of component A) are based on hexamethylene diisocyanate.

3. Process for the preparation of binders containing allophanate groups according to Claim 1 or 2, **characterized in that** 2-hydroxyethyl acrylate, 2-hydroxypropyl acrylate, 4-hydroxybutyl acrylate, polyethylene oxide mono-(meth)acrylate, polypropylene oxide mono(meth)acrylate and/or the reaction products of acrylic acid and glycidyl methacrylate are used in component B).

4. Process for the preparation of binders containing allophanate groups according to one of Claims 1 to 3, **characterized in that** one or more compounds selected from the group comprising monomeric diols and triols, polyethers derived therefrom and polylactones with an average molecular weight Mₙ of <1000 g/mol are used in component C).

5. Process for the preparation of binders containing allophanate groups according to one of Claims 1 to 4, **characterized in that** tetrabutylammonium 4-(methoxycarbonyl)phenate, tetrabutylammonium 2-(methoxycarbonyl)-phenate, tetrabutylammonium 4-formylphenate, tetrabutylammonium 4-nitrilophenate, tetrabutylphosphonium 4-(methoxycarbonyl)phenate, tetrabutylphosphonium 2-(methoxycarbonyl)phenate, tetrabutylphosphonium 4-formylphenate, tetrabutylammonium salicylate and/or tetrabutylphosphonium salicylate are used as catalyst in component D).

6. Process for the preparation of binders containing allophanate groups according to one of Claims 1 to 5, **characterized in that** the process temperatures are 20 to 100°C.

7. Binders containing allophanate groups and having activated groups that react with ethylenically unsaturated compounds by polymerization under the action of actinic radiation, obtainable by a process according to one of Claims 1 to 6.

8. Coating agents containing
a) one or more binders containing allophanate groups according to Claim 7,
b) optionally one or more polyisocyanates having free or blocked isocyanate groups and optionally containing groups that react with ethylenically unsaturated compounds by polymerization under the action of actinic radiation,
c) optionally other compounds, different from those of a), which have groups that react with ethylenically unsaturated compounds by polymerization under the action of actinic radiation, and optionally groups that react with NCO groups,
d) optionally one or more isocyanate-reactive compounds containing active hydrogen which are free of groups that react with ethylenically unsaturated compounds by polymerization under the action of actinic radiation,
e) initiators and
f) optionally auxiliary substances and additives.

9. Substrates coated with coatings obtainable from binders containing allophanate groups according to Claim 7.

## Revendications

1. Procédé de préparation de liants contenant des groupes allophanate, lesquels présentent des groupes réagissant sous l'action d'un rayonnement actinique avec des composés éthyléniquement-insaturés par polymérisation et éventuellement également des groupes NCO-réactifs, dans lequel on fait réagir
A) un ou plusieurs composés contenant des groupes uretdione et NCO-fonctionnels tout d'abord avec
B) un ou plusieurs composés qui présentent des groupes réactifs par rapport aux isocyanates et des groupes réagissant sous l'action d'un rayonnement actinique avec des composés éthyléniquement insaturés par polymérisation et ensuite
C) avec un ou plusieurs composés contenant des groupes hydroxyle différents de B), où au moins un de ces composés présente une fonctionnalité OH ≥ 2,
D) en présence d'un ou plusieurs composés contenant des groupes phénolate comme catalyseurs et
E) des auxiliaires et additifs facultatifs,
la réaction avec des composés du constituant C) se faisant au moins en partie avec la formation de groupes allophanate.

2. Procédé pour la préparation de liants contenant des groupes allophanate-selon la revendication 1, **caractérisé en ce que** les composés contenant des groupes uretdione du constituant A) sont à base de diisocyanate d'hexaméthylène.

3. Procédé pour la préparation de liants contenant des groupes allophanate selon la revendication 1 ou 2, **caractérisé en ce que** l'on utilise dans le constituant B) de l'acrylate de 2-hydroxyéthyle, de l'acrylate de 2-hydroxypropyle, de l'acrylate de 4-hydroxybutyle, du mono(méth)acrylate de poly(oxyde d'éthylène), du mono(méth)acrylate de poly(oxyde de propylène) et/ou les produits de réaction d'acide acrylique avec du méthacrylate de glycidyle.

4. Procédé pour la préparation de liants contenant des groupes allophanate selon l'une quelconque des revendications 1 à 3, **caractérisé en ce que** l'on utilise dans le constituant C) un ou plusieurs composés choisis dans le groupe constitué de di- et tri-ols monomères, de polyéthers ainsi que de polylactones dérivés de ceux-ci d'un poids moléculaire moyen Mn < 1000 g/mol.

5. Procédé pour la préparation de liants contenant des groupes allophanate selon l'une quelconque des revendications 1 à 4, **caractérisé en ce que** l'on utilise dans le constituant D) comme catalyseur du 4-(méthoxycarbonyl)phénolate de tétrabutylammonium, du 2-(méthoxycarbonyl)phénolate de tétrabutylammonium, du 4-formylphénolate de tétrabutylammonium, du 4-nitrilophénolate de tétrabutylammonium, du 4-(méthoxycarbonyl)phénolate de tétrabutylphosphonium, du 2-(méthoxycarbonyl)phénolate de tétrabutylphosphonium, du 4-formylphénolate de tétrabutylphosphonium, du salicylate de tétrabutylammonium et/ou du salicylate de tétrabutylphosphonium.

6. Procédé pour la préparation de liants contenant des groupes allophanate selon l'une quelconque des revendications 1 à 5, **caractérisé en ce que** les températures du procédé sont de 20 à 100°C.

7. Liants contenant des groupes allophanate avec des groupes réagissant sous l'action d'un rayonnement actinique avec des composés éthyléniquement insaturés par polymérisation, lesquels sont obtenus selon un procédé selon l'une quelconque des revendications 1 à 6.

8. Agents de revêtement contenant
a) un ou plusieurs liants contenant des groupes allophanate selon la revendication 7,
b) éventuellement un ou plusieurs polyisocyanates avec des groupes isocyanate libres ou bloqués, lesquels contiennent éventuellement des groupes réagissant sous l'action d'un rayonnement actinique avec des composés éthyléniquement insaturés par polymérisation,
c) éventuellement d'autres composés différents de ceux de a), lesquels présentent des groupes réagissant sous l'action d'un rayonnement actinique avec des composés éthyléniquement insaturés par polymérisation et éventuellement des groupes réactifs avec des groupes NCO,
d) éventuellement un ou plusieurs composés contenant de l'hydrogène actif réagissant avec des isocyanates, lesquels sont exempts de groupes réagissant sous l'action d'un rayonnement actinique avec des composés éthyléniquement insaturés par polymérisation,
e) des initiateurs,
f) éventuellement des auxiliaires et des additifs.

9. Substrats revêtus de revêtements obtenus à de liants contenant des groupes allophanate selon la revendication 7.
